**Europäisches Patentamt**

(19) **European Patent Office**

**Office européen des brevets**

(11) Veröffentlichungsnummer: **0 028 669**
**B1**

(12) EUROPÄISCHE PATENTSCHRIFT

(45) Veröffentlichungstag der Patentschrift:
25.01.84

(51) Int. Cl.³: **H 04 B 9/00**

(21) Anmeldenummer: **80102701.2**

(22) Anmeldetag: **16.05.80**

(54) Verfahren und Vorrichtung zum Konstanthalten der in einer Lichtleitfaser geführten Lichtleistung.

(30) Priorität: **08.11.79 DE 2945055**

(43) Veröffentlichungstag der Anmeldung:
**20.05.81 Patentblatt 81/20**

(45) Bekanntmachung des Hinweises auf die Patenterteilung:
**25.01.84 Patentblatt 84/4**

(84) Benannte Vertragsstaaten:
**CH FR GB IT LI SE**

(56) Entgegenhaltungen:
**FR - A - 2 435 026
FR - A - 2 438 942**

**FREQUENZ, Band 32, Nr. 12, Dezember 1978, Seiten 350-356 Berlin, DE. D. RITTICH et al.: "Messgeräte für die optische Nachrichtentechnik"
POST OFFICE ELECTRICAL ENGINEERS JOURNAL, Band 71, Nr. 2, August 1978, Seiten 122-129 London, G.B. M. EVE et al.: "Techniques for measuring the transmission properties of optical-fibre cables"**

(73) Patentinhaber: **Philips Kommunikations Industrie AG, Thurn-und-Taxis-Strasse 10, D-8500 Nürnberg 10 (DE)**

(72) Erfinder: **Streckert, Joachim, Dipl.-Ing., Schulzenweg 3, D-4300 Essen 14 (DE)**

(74) Vertreter: **Patentanwälte Dr. Solf & Zapf, Schlossbleiche 20 Postfach 13 02 19, D-5600 Wuppertal 1 (DE)**

## Verfahren und Vorrichtung zum Konstanthalten der in einer Lichtleitfaser geführten Lichtleistung

Die vorliegende Erfindung betrifft ein Verfahren zum Konstanthalten der in einer Lichtleitfaser geführten Lichtleistung, wobei mittels eines aus dem abgestrahlten Lichtbündel einer Lichtquelle gewonnenen Kontrollsignals die Ausgangsleistung der Lichtquelle geregelt wird.

Aus Frequenz, Bd. 32, Nr. 12, Dez. 1978, Seiten 350 - 356, ist es bekannt, aus dem von einer gepulsten Lichtquelle abgestrahlten Lichtbündel einen Teil abzuzweigen und einem Fotodetektor zuzuführen, dessen Ausgangsstrom proportional zur auftreffenden Lichtleistung ist und zur Regelung der Ausgangsleistung der Lichtquelle herangezogen wird. Die Kontrollgrösse ist dabei ein Teil der direkt von der Lichtquelle abgegebenen Lichtleistung, die mittels eines Strahlenteilers oder ähnlicher Verzweigungseinrichtungen aus dem zum Lichtleitfaser-Anfang laufenden Licht gewonnen wird. Der Nachteil dieses Verfahrens besteht darin, dass nur die Sendeleistung des Senders konstant gehalten wird, nicht jedoch die in die Lichtleitfaser eingekoppelte zu übertragende Lichtleistung. Die Beschaffenheit der Lichtleitfaser-Stirnfläche, Dejustierungen der Lichtleitfaser-Halterung während des Betriebs und Verschmutzung der Einkoppelungsoptik, Veränderung des Abstrahlwinkels des als Lichtquelle verwendeten Lasers durch Temperatureinflüsse werden durch dieses Verfahren nicht berücksichtigt. Eine verbesserte Signalkontrolle ist bereits vorgeschlagen worden, wobei in die Lichtleitfaser nahe der Einkoppelstelle eine Diskontinuität eingebaut wird, z.B. eine starke Krümmung, ein mäanderförmiger Verlauf der Lichtleitfaser, die Lichtleistung aus geführten Moden in Strahlungsmoden überkoppelt. Diese Leistung kann durch einen seitlich an der Faser angebrachten Detektor empfangen werden. Für Regelzwecke besteht der Nachteil darin, dass eine solche Diskontinuität 1. zwangsläufig mit Verlusten verbunden ist, die die mit der Lichtleitfaser übertragbare Länge reduzieren und 2. keine echte Proportionalität zwischen abgezweigter und weiterlaufender Lichtenergie garantiert, weil bei dämpfungsarmer Konstruktion der Diskontinuität nur eine kleine Anzahl der sich in der Faser ausbreitenden Moden ihre Energie in Strahlungsmoden überführen kann und damit die auskoppelbare Leistung nur ein Mass für die Leistung in den relativ schwach geführten Moden der Lichtleitfaser ist. Hierbei können Änderungen der Einkoppelbedingungen zum Fehlverhalten der Regelung führen.

Der vorliegenden Erfindung liegt nun die Aufgabe zugrunde, ein Verfahren und eine Vorrichtung der eingangs beschriebenen Art dahingehend zu verbessern, dass eine für die Regelung der Lichtquelle geeignete Kontrollgrösse erzeugt wird, die einerseits der gesamten in der Lichtleitfaser eingekoppelten Lichtleistung proportional ist und andererseits vom senderseitigen Ende der Lichtleitfaser her erfasst werden kann. Erfindungsgemäss wird dies dadurch erreicht, dass als Kontrollsignal die in Rückwärtsrichtung austretende Rayleigh-Streustrahlung aus einem nach Ort und Länge bestimmbaren Lichtleitfaser-Abschnitt verwendet wird, in welchem die Rayleigh-Streustrahlung unmittelbar proportional der in der Lichtleitfaser selbst geführten Lichtleistung ist.

Zwar ist es aus «Frequenz, Band 32, Dezember 1978, Seiten 350 - 356» in Verbindung mit Dämpfungsmessgeräten bekannt, als Messsignal die rückgestreute Rayleigh-Streuung zu verwenden, jedoch kann die Anwendung des bekannten physikalischen Effekts der «Rayleigh-Streustrahlung» für ein bestimmtes Dämpfungsmessverfahren keineswegs die Erfindung nahelegen; denn im vorliegenden Fall handelt es sich um eine vollständig neue Anwendung zur Leistungsregelung. Dabei liegt es nicht auf der Hand, dass die Änderung der zum Faseranfang zurückgestreuten Rayleigh-Lichtleistung aus jedem Längenelement proportional zur Änderung der geführten Lichtleistung des zu transmittierenden Signals ist. Zwar ist die Rückstreuleistung an jeder Stelle der Glasfaser proportional zur dort vorhandenen Lichtleistung; diese setzt sich jedoch nicht nur aus der gewünschten, zu regelnden Leistung aus geführten Moden zusammen, sondern enthält auch unter Umständen erhebliche Anteile von Streuleistung aus Mantelmoden und Leckwellen, die in praktischen Übertragungssystemen aufgrund der höheren Dämpfung aber nicht zur Signalübertragung bis zum Empfänger beitragen und deren Rückstreuleistung daher nicht als Mass für die Regelgrösse herangezogen werden darf. Im Extremfall kann es nämlich sogar passieren, dass die Rückstreuleistung konstant bleibt, obwohl sich zum Beispiel aufgrund variierender Anregungsbedingungen die Leistung in geführten Moden zugunsten der Leistung in Mantelmoden bzw. Leckwellen reduziert hat. Die Regelung würde also nicht aktiviert, die übertragene Leistung jedoch stark absinken.

Erfindungsgemäss wird nun ein der geführten Lichtleistung proportionales Kontrollsignal dadurch gewonnen, dass aus dem gesamten Rückstreusignal nur die aus einem nach Ort und Länge festlegbaren Abschnitt der Glasfaser stammende Rückstreuung verwendet wird. Hierdurch wird es erfindungsgemäss möglich, denjenigen Ort der Glasfaser auszuwählen wo der von Mantelmoden und Leckwellen herrührende Anteil an der Gesamtleistung vernachlässigbar klein ist, wodurch die Möglichkeit geschaffen wird, ein geeignetes Rückstreusignal auszuwählen. Dabei wird man abhängig von den jeweiligen Eigenschaften der verwendeten Lichtleitfasern den jeweiligen Faserabschnitt auswählen, da dies für die einzelnen Lichtleitfaser-Typen unterschiedlich ist.

Die Erfindung basiert auf der Erkenntnis, dass die Rayleigh-Streustrahlung grundsätzlich nicht geeignet ist und erst die erfindungsgemässe Lehre, einen bestimmten Abschnitt der Lichtleitfaser auszuwählen und aus diesem die rückgestreute Strahlung zu erfassen, dem Fachmann die Möglichkeit an die Hand gibt, ein geeignetes Rückstreusignal zu gewinnen.

Somit wird durch das erfindungsgemässe Verfahren erreicht, dass am Faseranfang eine Kontrollgrösse zur Verfügung steht, die ein direktes Mass für die Leistung des einen festlegbaren Abschnitt der Lichtleitfaser durchlaufenden Lichtimpulses ist. Wenn diese Kontrollgrösse durch einen Regelkreis konstant gehalten wird, so ist auch gewährleistet, dass die Spitzenleistung der übertragenen Lichtimpulse konstant bleibt. Damit eignet sich die Erfindung z.B. zur Regelung des Nutzsignalpegels eines Lichtleitfaser-Übertragungs- oder Messsystems.

Weiterhin bezieht sich die vorliegende Erfindung auf eine Vorrichtung zur Durchführung des erfindungsgemässen Verfahrens bestehend aus einer gepulsten Lichtquelle, vorzugsweise einem Laser, einem Strahlungsteiler, einem Fotodetektor und einer Auswertelektronik und Regeleinrichtung zur Steuerung der Lichtquelle. Dabei ist erfindungsgemäss vorgesehen, dass die Auswertelektronik aus einer Sample-and-Hold-Schaltung besteht, mit der durch ein Steuersignal das Streusignal eines bestimmten Lichtleitfaser-Abschnitts aus dem Gesamtsignal herausgeschnitten wird, das anschliessend gemittelt und dann zur Steuerung der Lichtquelle verwendet wird. Eine derartige Auswertelektronikschaltung ist aus der obigen Literaturstelle bereits grundsätzlich bekannt.

Durch die Verwendung einer Sample-and-Hold-Schaltung ergibt sich eine sehr einfache und preiswerte Herstellbarkeit.

Weitere vorteilhafte Ausführungsformen sind in den Unteransprüchen 5 bis 10 enthalten.

Anhand der beiliegenden Zeichnungen wird die Erfindung näher erläutert. Es zeigen:

Fig. 1 ein Prinzipschaltbild einer erfindungsgemässen Vorrichtung

Fig. 2 ein Prinzipschaltbild der erfindungsgemäss verwendeten Auswertelektronik.

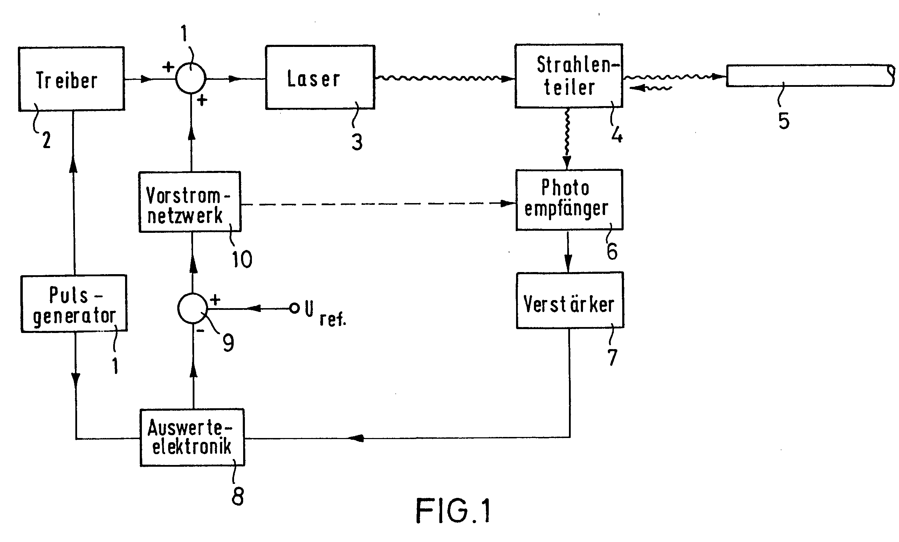

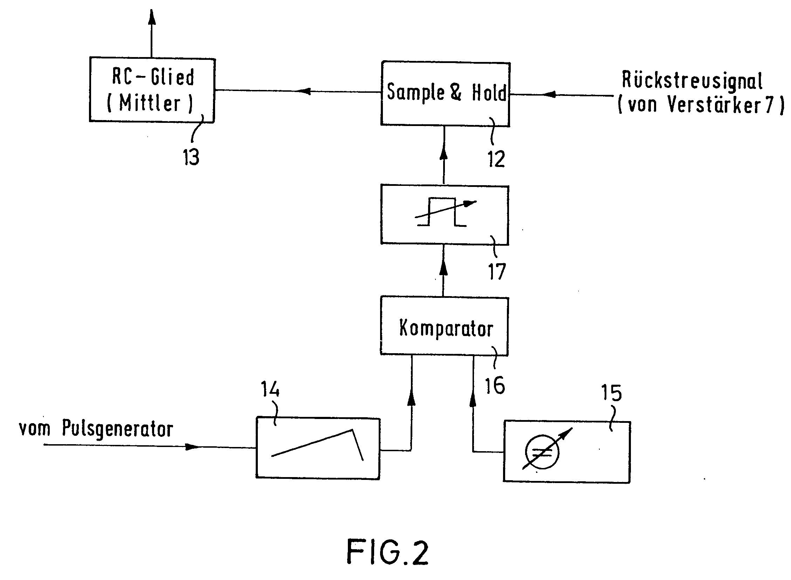

Wie sich aus Fig. 1 ergibt, werden von einem durch einen Pulsgenerator 1 über einen Treiber 2 getriggerten Laser 3 Lichtimpulse von kurzer Dauer und hoher Intensität erzeugt. Diese werden über einen Strahlenteiler 4 in eine Lichtleitfaser 5 eingekoppelt, und das von dieser rückgestreute Licht, insbesondere die in Rückwärtsrichtung aus der Lichtleitfaser austretende Rayleigh-Streuung wird über den Strahlenteiler 4 auf einen Fotoempfänger 6 geleitet. Als Strahlenteiler 4 kann beispielsweise eine Lichtleitverzweigung verwendet werden. Dem Fotoempfänger ist ein Verstärker 7 nachgeschaltet, der vorzugsweise eine grosse Bandbreite bei geringem Eigenrauschen besitzt. Zur Aufbereitung des aus der Rayleigh-Streuung gewonnenen Kontrollsignals wird das verstärkte Signal einer Auswertelektronik 8 zugeführt. Der Aufbau dieser Auswertelektronik ergibt sich aus Fig. 2. Diese Auswertelektronik 8 wird ebenfalls von dem Pulsgenerator 1 gesteuert. In der Auswertelektronik wird durch Abtastung ein Stück aus dem Gesamtsignal herausgeschnitten und gemittelt. Die gemittelte Ausgangsspannung wird mit einer einstellbaren Referenzspannung $U_{ref}$ in einem Differenzierbildner 9 verglichen und diese Differenzspannung auf ein Vorstromnetzwerk 10 gegeben. In diesem Vorstromnetzwerk wird ein entsprechend proportionaler Gleichstrom erzeugt, der in einer Addierstufe 11 dem Pulsstrom des Treibers überlagert wird, so dass somit eine Regelung des Lasers in Abhängigkeit von Änderungen im Rayleigh-Streusignal erfolgt.

Fig. 2 zeigt den Aufbau der Auswertelektronik 8. Diese besteht aus einer Sample-and-Hold-Schaltung 12 mit nachgeschaltetem als Mittler dienendem R-C-Glied 13. Mittels der Sample-and-Hold-Schaltung 12 wird das durch einen Triggerimpuls periodisch ausgelöste Rückstreusignal abgetastet. Die Steuerung für die Sample-and-Hold-Schaltung besteht aus einem Rampengenerator 14, der vom Pulsgenerator 1 getriggert wird, sowie aus einer verstellbaren Konstantspannungsquelle 15. Die Länge der Rampe des Rampengenerators entspricht der doppelten Laufzeit des Lichtimpulses durch die Faser. Die Ausgangssignale des Rampengenerators 14 sowie der Konstantspannungsquelle 15 werden auf einen Komparator 16 gegeben. Der Komparator 16 liefert einen Sample-Befehl, der in einem Impulsformer 17 in einen Rechteckimpuls umgeformt wird und die Sample-and-Hold-Schaltung ansteuert. Die Breite des Rechteckimpulses bestimmt die Länge des gewählten Zeitfensters, durch die verstellbare Konstantspannungsquelle wird der Abtastzeitpunkt und damit der Abtastort festgelegt. Mittels der beschriebenen Steuereinheit kann somit ein Stück aus dem Gesamtstreusignal herausgeschnitten werden, so dass das Rayleigh-Streusignal an einem bestimmten Lichtleitfaserort ausgewählt werden kann.

Bei starken Schwankungen der Sendeleistung des Lasers 3 kann es unter Umständen zweckmässig sein, auch den Pulsstrom, der vom Treiber 2 geliefert wird, nachzuregeln.

Das erfindungsgemässe Verfahren kann zweckmässigerweise auch bei Reflexions-Messverfahren zur Fehlerortung innerhalb der Lichtleitfaser oder bei Rückstreuverfahren eingesetzt werden, bei denen der Empfänger am senderseitigen Ende der Lichtleitfaser positioniert ist. Hierbei kann es zweckmässig sein, die Regelung unmittelbar auf den Fotoempfänger rückzuführen, wobei dann anstelle des Vorstromnetzwerkes 10 ein Vorspannungsnetzwerk tritt. Hierbei erfolgt dann keine Regelung des Lasers, sondern vielmehr unmittelbar eine Regelung des Fotoempfängers.

**Patentansprüche**

1. Verfahren zum Konstanthalten der in einer Lichtleitfaser geführten Lichtleistung, wobei mittels eines aus dem abgestrahlten Lichtbündel einer Lichtquelle gewonnenen Kontrollsignals die Ausgangsleistung der Lichtquelle geregelt wird, dadurch gekennzeichnet, dass als Kontrollsignal die in Rückwärtsrichtung austretende Rayleigh-Streustrahlung aus einem nach Ort und Länge bestimmbaren Lichtleitfaser-Abschnitt verwendet wird, in welchem die Rayleigh-Streustrahlung unmittelbar proportional der in der Lichtleitfaser selbst geführten Lichtleistung ist.

2. Verfahren nach Anspruch 1, dadurch gekennzeichnet, dass das Kontrollsignal nach Auswertung zur Regelung des Vorwärtsstroms der Lichtquelle verwendet wird.

3. Vorrichtung zum Durchführen des Verfahrens nach Anspruch 2, bestehend aus einer gepulsten Lichtquelle, einem Strahlungsteiler, einem Fotodetektor und aus einer Auswertelektronik und Regeleinrichtung zur Steuerung der Lichtquelle, dadurch gekennzeichnet, dass die Auswertelektronik (8) aus einer Sample-and-Hold-Schaltung (12) besteht, mit der durch ein Steuersignal das Rückstreusignal eines bestimmten Lichtleitfaser-Abschnitts aus dem Gesamtsignal herausgeschnitten wird, das anschliessend gemittelt und auf die Lichtquelle zu deren Steuerung geführt wird.

4. Vorrichtung nach Anspruch 3, dadurch gekennzeichnet, dass das Steuersignal für die Sample-and-Hold-Schaltung (12) mittels eines Rampengenerators (14) und einer verstellbaren Konstant-Spannungs-Quelle (15) erzeugt wird, wobei die Rampe des Rampengenerators (14), deren Länge der doppelten Laufzeit des Lichtimpulses durch die Faser entspricht, durch einen Triggerimpuls des Pulsgenerators (1) für die Lichtquelle (3) gestartet wird, und mit der verstellbaren Konstantspannungsquelle (15) der Abtastzeitpunkt bzw. -ort innerhalb der Lichtleitfaser festgelegt wird.

5. Vorrichtung nach Anspruch 3 oder 4, dadurch gekennzeichnet, dass die Ausgangssignale des Rampengenerators (14) und der Konstantspannungsquelle (15) in einem Komparator (16) verglichen werden, dessen Ausgangssignale einen Impulsformer (17) ansteuern, durch dessen rechteckförmige Ausgangsimpulse, deren Breite die Länge des Abtastintervalls bestimmen, die Sample-and-Hold-Schaltung gesteuert wird.

6. Vorrichtung nach einem der Ansprüche 3 bis 5, dadurch gekennzeichnet, dass die Mittlung des Ausgangssignals der Sample-and-Hold-Schaltung (12) mittels eines RC-Glieds (13) erfolgt.

7. Vorrichtung nach Anspruch 6, dadurch gekennzeichnet, dass die Ausgangsspannung des RC-Glieds (13) mit einer einstellbaren Referenzspannung (U$_{ref}$) verglichen wird und die daraus resultierende Spannungsdifferenz auf ein Vorstromnetzwerk (10) gegeben wird.

8. Vorrichtung nach Anspruch 7, dadurch gekennzeichnet, dass der in dem Vorstromnetzwerk (10) erzeugte Gleichstrom in einer Addierstufe (11) dem Pulsstrom des Pulsgenerators (1) überlagert wird.

## Claims

1. method of stabilizing the light power carried by an optical fiber in which the output power of the light source is controlled by means of a control signal derived from the light beam radiated by a light source, characterized in that as a control signal is used the Rayleigh scattered radiation emanating in a reverse direction from a section of the optical fiber which can be de-termined according to location and length, in which the Rayleigh scattered radiation is directly proportional to the light power guided in the optical fiber itself.

2. A method as claimed in claim 1, characterized in that the control signal after evaluation is used for the control of the forward current of the light source.

3. A device for carrying out the method as claimed in claim 2, comprising a pulsated light source, a radiation divider, a photodetector and an electronic evaluation system and a control device for controlling the light source, characterized in that the electronic evaluation system (8) consists of a sample-and-hold circuit (12) which by means of a control signal cuts out of the overall signal the backscatter signal of a given section of the optical fiber, which is then averaged and is applied to the light source for the control thereof.

4. A device as claimed in claim 3, chracterized in that the control signal for the sample-and-hold circuit (12) is generated by means of a ramp generator (14) and an adjustable constant voltage source (15), in which the ramp of the ramp generator (14) whose length corresponds to the double transit time of the light pulse through the fiber, is started by a trigger pulse of the pulse generator (1) for the light source (3) and the scanning point of time and plane, respectively within the optical fibre is fixed by the adjustable constant voltage source (15).

5. A device as claimed in claims 3 and 4, characterized in that the output signals of the ramp generator (14) and of the constant voltage source (15) are compared in a comparator (16) whose output signals control a pulse shaper (17) by whose rectangular output pulses, which determine the length of the sampling interval, the sample-and-hold circuit is controlled.

6. A device as claimed in any of the claims 3 to 5, characterized in that the averaging of the output signals of the sample-and-hold circuit (12) occurs by means of an RC-member (13).

7. A device as claimed in claim 6, characterized in that the output voltage of the RC-member (13) is compared with an adjustable reference voltage (U$_{ref}$) and the voltage difference resulting therefrom is applied to a bias current network (10).

8. A device as claimed in claim 7, characterized in that the direct current produced in the bias current network (10) is superimposed upon the pulse current of the pulse generator (1) in an adder stage (11).

## Revendications

1. Procédé pour maintenir constante la puissance lumineuse transportée par une fibre optique, selon le rendement de sortie d'une source lumineuse est réglé à l'aide d'un signal de contrôle obtenu à partir du faisceau lumineux rayonné de la source lumineuse, caractérisé en ce que comme signal de contrôle est utilisée le rayonnement de diffraction de Rayleigh sortant dans la direction inverse d'une section de fibre optique, à déterminer suivant le lieu et la longueur, dans laquelle le rayonnement de diffraction de Rayleigh est directement proportionelle à la puissance lumineuse introduite dans la fibre optique même.

2. Procédé selon la revendication 1, caractérisé en ce que le signal de contrôle est utilisé après évaluation pour le réglage du courant de conduction de la source lumineuse.

3. Dispositif pour la mise en oeuvre du procédé selon la revendication 2, constitué par une source lumineuse pulsée, de préférence un laser, un diviseur de rayons, un photodétecteur et une électronique d'évaluation et un dispositif de réglage pour la commande de la source lumineuse, caractérisé en ce que l'électronique d'évaluation est constituée par un circuit «d'échantillonnage et de maintien» à l'aide duquel le signal de diffusion d'une section de fibre optique déterminée est coupé du signal total par un signal de contrôle, signal de diffusion dont on prend ensuite la moyenne et qui est utilisé pour la commande de la source lumineuse.

4. Dispositif selon la revendication 3, caractérisé en ce que le signal de commande pour le circuit d'échantillonnage et de maintien (12) s'obtient par l'intermédiaire d'un générateur de rampe (14) et d'une source de tension constante réglable (15), la rampe du générateur de rampe (14), dont la longueur correspond au double de la durée de l'impulsion lumineuse traversant la fibre, est démarrée par une impulsion d'énclenchement provenant du générateur d'impulsions (1) pour la source lumineuse (3) et le moment d'exploration ou le lieu d'exploration dans la fibre optique est déterminé à l'aide de la source de tension constante reglable (15).

5. Dispositif selon la revendication 3 ou 4, caractérisé en ce que les signaux de sortie du générateur de rampe (14) et la source de tension constante (15) sont comparés dans un comparateur (16), dont les signaux de sortie excitent une formateur d'impulsions (17), dont les impulsions de sortie rectangulaires, dont la largeur détermine la longueur des intervalles d'exploration, excitent le circuit d'échantillonnage et de maintien.

6. Dispositif selon l'une des revendications 3 à 5, caractérisé en ce que la moyenne du signal de sortie du circuit d'échantillonnage et de maintien (12) est déterminée par un circuit R.C. (13).

7. Dispositif selon la revendication 6, caractérisé en ce que la tension de sortie du circuit R.C. (13) est comparée avec une tension de référence réglable ($U_{ref}$) et la différence de tension en résultante est amenée à un réseau de courant de polarisation (10).

8. Dispositif selon la revendication 7, caractérisé en ce que le courant continu obtenu dans le réseau de courant de polarisation (10) est superposé au courant d'impulsion du générateur d'impulsions (1) dans un étage additionneur.

**FIG.1**

Strahlenteiler 4

Laser 3

5

Photoempfänger 6

Verstärker 7

Vorstromnetzwerk 10

Treiber 2

Pulsgenerator 1

Auswerteelektronik 8

$U_{ref.}$

9

FIG.2